**Europäisches Patentamt**

**European Patent Office**

**Office européen des brevets**

(19)

(11) Veröffentlichungsnummer: **0 117 999**
**B1**

(12) # EUROPÄISCHE PATENTSCHRIFT

(45) Veröffentlichungstag der Patentschrift:
15.10.86

(21) Anmeldenummer: **84100732.1**

(22) Anmeldetag: **25.01.84**

(51) Int. Cl.⁴: **A 01 N 25/04,** A 01 N 57/16,
A 01 N 47/30 //
(A01N57/16, 37:32),
(A01N47/30, 39:02, 33:18)

(54) Pflanzenschutzmittel in Form von Mischdispersionen.

(30) Priorität: **27.01.83 DE 3302648**

(43) Veröffentlichungstag der Anmeldung:
**12.09.84 Patentblatt 84/37**

(45) Bekanntmachung des Hinweises auf die Patenterteilung:
**15.10.86 Patentblatt 86/42**

(84) Benannte Vertragsstaaten:
**AT BE CH DE FR GB IT LI NL**

(56) Entgegenhaltungen:
**EP-A-0 017 001**
**EP-A-0 022 925**
**EP-A-0 024 188**
**DE-A-1 932 814**

(73) Patentinhaber: **HOECHST AKTIENGESELLSCHAFT,
Postfach 80 03 20, D-6230 Frankfurt am Main 80
(DE)**

(72) Erfinder: **Albrecht, Konrad, Dr., Sodener Strasse
64, D-6233 Kelkheim (Taunus) (DE)**
Erfinder: **Frisch, Gerhard, Dr., Westerwaldstrasse
7, D-6393 Wehrheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft flüssige, pesticide Zubereitungen von Wirkstoffmischungen in Form von wäßrigen Mischdispersionen die unter 70°C schmelzende Wirkstoffe in Kombination mit oberhalb von 70°C schmelzenden Wirkstoffen enthalten.

Als oberhalb 70°C schmelzende Wirkstoffe kommen insbesondere in Betracht:

herbizide Harnstoff-Derivate wie

Isoproturon [N,N Dimethyl - N' - (4 - isopropyl - phenyl - )harnstoff], Linuron [N - (3,4 - Dichlorphenyl) - N' - methoxy - N' - methylharnstoff], Monolinuron [N - (4 - Chlorphenyl) - N' - methoxy - N' - methylharnstoff] und Diuron [N - (3,4 - Dichlorphenyl) - N',N' - dimethylharnstoff],

herbizide Triazin-Derivate wie

Atrazin [2 - Chlor - 4 - ethylamino - 6 - isopropylamino - 1,3,5 - triazin], Cyanazin [2 - (4 - Chlor - 6 - ethylamino - 1,3,5 - triazin - 2 - ylamino) - 2 - methylpropionitril] und Simazin [2 - Chlor - 4,6 - bis - ethylamino - 1.3.5 - triazin],

fungizide Wirkstoffe wie

Fentinhydroxid (Triphenylzinnhydroxid), Carbendazim (Methylbenzimidazol - 2 - ylcarbamat), Captafol [3a,4,7,7a - Tetrahydro - N - (1,1,2,2 tetrachlorethyl - thio)]phthalimid und

als insektizider Wirkstoff Endosulfan (6,7,8,9,10,10 - Hexachlor - 1,5,5a,9a - tetrahydro - 6,9 - methano - 2,4,3 - benzo - dioxa - thiepinoxid).

Als unter 70°C schmelzende Wirkstoff kommen insbesondere in Betracht:

herbizide Wirkstoffe wie

Trifluralin [2,6 - Dinitro - N,N - dipropyl - 4 - trifluormethyl - anilin], Pendimethalin [N - (1 - ethylpropyl) - 2,6 - dinitro - 3,4 - xylidin], Dinoseb-acetat (O - Acetyl - 2 - sec - butyl - 4,6 - dinitrophenol), Dowco 433 [4 - Amino - 3,5 - dichlor - 6 - fluor - 2 - pyridinoxyessigsäure - isoctyl-ester]sowie

herbizide Phenoxypropionsäureester, insbesondere

Diclofop-methyl [2 - (4 - (2,4 - Dichlorphenoxy) - phenoxy)propionsäuremethylester], 2 - (4 - (6 - Chlor - 2 - benzoxazoyloxy) - phenoxy) - propionsäure - ethylester, 2 - (4 - (6 - chlor - 2 - benzthiazolyloxy) - phenoxy) - propionsäure - ethylester und

als fungizider Wirkstoff Pyrazophos [2 - O,O - Diäthylthiono - phosphoryl) - 5 - methyl - 6 - carbäthoxy - pyrazolo[1.5 - a] - pyrimidin].

Die obengenannten Wirkstoffe sind alle bekannt. Soweit common names angegeben sind, werden sie in H. Martin, The Pesticide Mannual, British Crop Protection Counsel, 6th edition 1979 beschrieben. Die beiden Benzoxazolyl- bzw. Benzthiazolyl-phenoxypropionsäuren sind aus DE—OS 2640730 bekannt. 4 - Amino - 3,5 - dichlor - 6 - fluor - 2 - pyridin - oxyessigsäureisoctylester (Dowco 433) ist in der Europäischen Patentanmeldung Nr. 67 712 beschrieben.

Es ist bekannt, Wirkstoffgemische in Form von sogenannten Tankmischungen zu applizieren. Eine Tankmischung ist die auf eine bestimmte Anwendungskonzentration gebrachte wäßrige Verdünnung aus den beiden Formulierungen der einzelnen Wirkstoffe, die als Emulsionskonzentrat, als Suspensionkonzentrat oder als Spritzpulver vorliegen können. Die Formulierungen der einzelnen Wirkstoffe sind hierbei jeweils genau an deren physikalische und chemische Eigenschaften angepaßt. Dies bedingt jeweils bezogen auf den speziellen Wirkstoff eine spezielle Auswahl der Lösungsmittel und des Hilfsstoffsystems, wie Emulgatoren, Dispergiermittel, Netzmittel. Bei solchen Tankmischungen bereitet die Nichtverträglichkeit der einzusetzenden Formulierungen häufig Schwierigkeiten. So können Entmischungen, Ausflockungen, Agglomeratbildungen, die zur Verstopfung der Spritzdüsen führen, oder Koagulationen auftreten, die ein geordnetes Ausbringen der Wirkstoffe empfindlich stören oder gänzlich unterbinden.

Um diese Mängel zu beheben, ist es grundsätzlich möglich, die betreffenden Wirkstoffgemische als Fertigformulierungen zusammen als Emulsionskonzentrat, als Suspensionskonzentrat oder als Spritzpulver zu formulieren. Die Formulierung zweier oder mehrerer Wirkstoffe nach einer Formulierungsart wird jedoch durch Unterschiede der physikalisch chemischen Eigenschaften der Wirkstoffpartner erschwert oder gar unmöglich, insbesondere dann, wenn große Unterschiede in den Löslichkeiten und Schmelzpunkten der einzelnen Verbindungen vorliegen. Dies gilt ganz besonders für Mischungen aus festen und flüssigen Wirkstoffen.

Gemäß der europäischen Patentanmeldung 17 001 ist bekannt, daß man Formulierungen von Wirkstoffgemischen dadurch herstellen kann, indem man eine wäßrige Wirkstoffsuspension mit einem festen Wirkstoff vermischt. Gemäß der europäischen Patentanmeldung 33 291 ist ferner bekannt, einer wäßrigen Wirkstoffsuspension einen weiteren Wirkstoff in geschmolzener Form zuzusetzen. Diese Verfahren lassen sich jedoch nur für ganz spezielle Wirkstoffsysteme verwenden. So ist es nicht möglich, die obengenannten unter 70°C schmelzenden Wirkstoffe mit den obengenannten höher schmelzenden Wirkstoffen nach diesen Verfahren zu formulieren. Bei Zugabe der flüssigen niedriger schmelzenden Wirkstoffkomponente zu Suspensionskonzentration der höher schmelzenden Komponente koagulieren die erstarrenden Wirkstoffpartikel mit den im Suspensionskonzentrat enthaltenden Wirkstoffpartikeln.

Überraschenderweise wurde nun gefunden, daß wäßrige Suspensionskonzentrate von oberhalb 70°C schmelzenden Wirkstoffen stabile Mischdispersionen mit Wirkstoffkonzentraten von unterhalb 70°C schmelzenden Wirkstoffen bilden, wenn letztere auf der Basis von Phthalsäure($C_1$—$C_{12}$)alkylestern als Lösungsmittel formuliert werden.

Gegenstand der vorliegenden Erfindung sind daher flüssige pestizide Mittel auf der Basis von wäßrigen Mischdispersionen, dadurch gekennzeichnet, daß sie ein Wirkstoffkonzentrat eines oder mehrerer unter 70°C schmelzender Wirkstoffe auf Basis von Phthalsäure- ($C_1$—$C_{12}$) Alkylestern als Lösungsmittel in Kombination mit einem wäßrigen Suspensionskonzentrat eines oder mehrerer über 70°C schmelzender Wirkstoffe enthalten.

Als Wirkstoffe kommen insbesondere die obengenannten Pestizide in Betracht. Die Suspensionskonzentrate werden hierbei mit üblichen Formulierungshilfsmitteln insbesondere mit solchen, die in der DE—OS—2 924 403 und der EP—A—110174 genannt werden, formuliert.

Die Wirkstoffkonzentrate werden mit Hilfe von bekannten Emulgatoren wie Triäthanolaminsalze eines Gemisches von Phosphorsäuremono- und -diestern eines Tristyrylphenol-Polyglykoläthers mit 18 AeO-Einheiten[*) ($^R$Soprophor FL, Rhône Poulenc) oder Aminsalze von ethoxylierten Polyacrylphenolen (Präparation 10-D-12$^R$, Rhône Poulenc) oder Polyglykolether eines Phenolaldehyds oder Kondensationsprodukte von Alkylphenolen mit Formaldehyd und Polyaminen ($^R$Sandoperol A oder $^R$Sandoperol SB, Sandoz) oder ein Gemisch aus ionogenen und nichtionogenen Tensiden ($^R$Atlox 4658, Atlas Chemie) formuliert.

Als Phthalsäure ($C_1$—$C_{12}$) alkylester wird vorzugsweise ein Phthalsäure- di($C_4$ bis $C_8$) alkylester verwendet. Den Phthalsäureestern können zur Viskositätsverbesserung aromatische Lösungsmittel wie beispielsweise 1/2-Methylnaphthalin, $^R$Solvesso 100 (Kp 162—177°C), $^R$Solvesso 150 (Kp 187—207°C, $^R$Solvesso 200 (Kp 219—282°C) in einer Menge bis zu 10 Gew.-%, bezogen auf den eingesetzten Phthalsäureester, zugegeben werden.

Im Falle der Suspensionskonzentrate wird als Netzmittel vorzugsweise ein Alkalisalz eines ($C_6$—$C_{24}$) Alkylpolyglykolether-(mit 2—20 AeO)-phosphatpartialesters eingesetzt. Als Dispergiermittel werden vorzugsweise Alkalisalze von Sulfobernsteinsäurehalbestern, Alkaliligninsulfonate oder Kondensationsprodukte von Formaldehyd mit Kresolen eingesetzt. Dem Suspensionskonzentrat werden ferner geringe Mengen eines Aluminiumsilikats mit Blattstruktur vom Typ der Bentonite wie beispielsweise $^R$Hectorit oder Montmorillonite, daneben Gemische aus gleichen Teilen eines Alkaliligninsulfonats mit einem quellfähigen Erdalkalisilikat als Verdicker gemäß EP—A—0 110 174 sowie geringe Mengen eines Entschäumers auf der Basis von Tributylphosphat oder auf Silikonbasis und geringe Mengen eines Polysaccharids wie beispielsweise $^R$Rhodopel 23 (Rhône Poulenc) zugegeben. Darüber hinaus kann ein Frostschutzmittel wie beispielsweise Äthylenglykol, Propylenglykol, Glycerin hinzugefügt werden.

Die Suspensionkonzentrate umfassen 5—55 Gew.-% Wirkstoffe, 2 bis 30 Gew.-% Dispergiermittel, 0,1 bis 5 Gew.-% Verdicker 0,5 bis 8 Gew.-% Netzmittel, daneben 0,1 bis 2 Gew.-% eines Aluminiumsilikates mit Blattstruktur, 0,2 bis 4 Gew.-% Entschäumer, 0 bis 20 Gew.-% Frostschutzmittel und 0,01 bis 3 Gew.-% Polysaccharid; der Rest zu 100 Gew.-% entspricht Wasser. Diese wäßrigen Suspensionen werden in der üblichen Art und Weise durch Naßvermahlung mit Kugelreibmühlen hergestellt.

Die Wirkstoffkonzentrate umfassen 5 bis 50 Gew.-% Wirkstoff, 10 bis 80 Gew.-% Phthalsäureester und 2 bis 20 Gew.-% an Emulgatoren.

Zur Herstellung der erfindungsgemäßen Mischdispersionen werden die oben beschriebenen Suspensions- und Wirkstoffkonzentrate unter heftigem Rühren zusammengegeben, wobei beliebige Mischungsverhältnisse gewählt werden können.

Bevorzugt wird das Verhältnis von Suspensionskonzentrat zu Wirkstoffkonzentrat im Bereich von 0,1:5 bis 5:0,1 gewählt.

Nachfolgend sind beispielhaft einige Kombinationsmöglichkeiten von Wirkstoffen für die erfindungsgemäßen Mischdispersionen angegeben:

---

[*) AeO=Ethylenoxid

| Suspensionskonzentrat | Wirkstoffkonzentrat |
| --- | --- |
| Diuron | Pendimethalin |
| Diuron | Trifluralin |
| Diuron | Pendimethalin+Trifluralin |
| Atrazin+Cyanazin | Pendimethalin |
| Atrazin+Cyanazin | Trifluralin |
| Atrazin+Cyanazin | Pendimethalin+Trifluralin |

# 0 117 999

| Suspensionskonzentrat | Wirkstoffkonzentrat |
|---|---|
| Atrazin+Simazin | Pendimethalin |
| Atrazin+Simazin | Trifluralin |
| Atrazin+Simazin | Pendimethalin+Trifluralin |
| Simazin+Cyanazin | Pendimethalin |
| Simazin+Cyanazin | Trifluralin |
| Simazin+Cyanazin | Pendimethalin+Trifluralin |
| Diuron+Isoproturon | Pendimethalin |
| Diuron+Isoproturon | Trifluralin |
| Diuron+Isoproturon | Pendimethalin+Trifluralin |
| Diuron+Atrazin | Pendimethalin |
| Diuron+Atrazin | Trifluralin |
| Diuron+Atrazin | Pendimethalin+Trifluralin |
| Isoproturon | Trifluralin |
| Isoproturon | Pendimethalin |
| Isoproturon | (4-Amino-3,5-dichlor-6-fluor-2-pyridin)oxy-essigsäure-isooctylester |
| Isoproturon | Trifluralin+Pendimethalin |
| Isoproturon | Diclofopmethyl |
| Linuron | Diclofopmethyl |
| Linuron | Trifluralin |
| Linuron | Pendimethalin |
| Linuron | Trifluralin+Pendimethalin |
| Linuron | Dinoseb-acetat |
| Captafol | Pyrazophos |
| Carbendazim | Pyrazophos |
| Carbendazim | Diclofopmethyl |
| Fentinhydroxid | Pyrazophos |
| Fentinhydroxid | Diclofopmethyl |
| Endosulfan | Diclofopmethyl |
| Endosulfan | Pyrazophos |
| Atrazin | Pendimethalin |
| Cyanazin | Pendimethalin |
| Cyanazin | Trifluralin |
| Cyanazin | Pendimethalin+Trifluralin |
| Simazin | Pendimethalin |
| Simazin | Trifluralin |
| Simazin | Pendimethalin+Trifluralin |

Von diesen Wirkstoffkombinationen sind bevorzugt zu nennen

Isoproturon/Trifluralin,
Isoproturon/Pendimethalin,
Isoproturon/Diclofopmethyl,
Captafol/Pyrazophos;

insbesondere bevorzugt sind die Kombinationen Isoproturon/Trifluralin und Isoproturon/Pendimethalin.
Die erfindungsgemäßen Formulierungen sind überraschend wärmeund froststabil im Bereich von Temperaturen zwischen −15°C und +50°C. Auch nach eineinhalb bis zwei Jahren zeigen die erfindungsgemäßen Formulierungen keinerlei Veränderungen wie Abscheidungen, Ausflockungen etc.
Die in der folgenden Tabelle zusammengefaßten Formulierungsbeispiele 1 bis 42 belegen die breite Anwendbarkeit der Erfindung.

4

| Zusammensetzung | Beispiele; Angaben der Bestandteile in Gew.-% | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Isoproturon-Susp.[1] | 34,5 | 40 | 79,2 | 34,5 | 59 | | | | | | | | |
| Linuron-Suspension[2] | | | | | | 40 | 40 | 55 | 40 | 40 | | | |
| Captafol-Suspension[3] | | | | | | | | | | | 58 | | |
| Carbendazim-Susp.[4] | | | | | | | | | | | | 8 | 56 |
| Trifluralin | 17,0 | | | 12 | | | 20 | | 15 | | | | |
| Pendimethalin | | 20 | | 10 | | | | 18 | 7 | | | | |
| Dowco 433 | | | 5,6 | | | | | | | | | | |
| Diclofopmethyl | | | | | 15,2 | 13 | | | | | | 20 | |
| Dinosebacetat | | | | | | | | | | 20 | | | |
| Pyrazophos | | | | | | | | | | | 15 | | 16 |
| Endosulfan | | | | | | | | | | | | | |
| Wasser | 20,1 | | 6,8 | 15,4 | 3,0 | 16,5 | 10 | 2 | 4 | 8 | 5 | 35 | 4 |
| RSoprophor FL | 9,1 | | 2,8 | 9,1 | 7,6 | 9,5 | 5 | 7 | 9 | 4,5 | 6 | 7 | 6 |
| Dioctylphthalat | 19,3 | 20 | 5,6 | 19 | 15,2 | 21 | 25 | 18 | 25 | | 12 | 30 | 18 |
| 1/2 Methylnaphthalin | | | | | | | | | | | 4 | | |
| Dibutylphthalat | | | | | | | | | | 27,5 | | | |
| RSandoperol A | | 20 | | | | | | | | | | | |

Fortsetzung Tabelle

| Zusammensetzung | Beispiele | | | | | | | | | | | | | | |
|---|---|---|---|---|---|---|---|---|---|---|---|---|---|---|---|
| | 14 | 15 | — | 16 | 17 | 18 | 19 | 20 | 21 | 22 | 23 | 24 | 25 | 26 | 27 |
| Fentinhydroxid-Susp.[5] | 50 | 5 | | | | | | | | | | | | | |
| Endosulfan-Susp.[6] | | | | 8 | 60 | | | | | | | | | | |
| Atrazin-Susp.[7] | | | | | | 40 | | | | | | | | | |
| Cyanazin-Susp.[8] | | | | | | | 40 | 30 | 30 | | | | | | |
| Simazin-Susp.[9] | | | | | | | | | | 40 | 30 | 30 | | | |
| Diuron-Susp.[10] | | | | | | | | | | | | | 60 | 60 | 60 |
| Trifluralin | | | | | | | | 18 | 12 | | 18 | 12 | | 5 | 5 |
| Pendimethalin | | | | | | 15 | 20 | | 18 | 20 | | 18 | 6 | | 3 |
| Diclofopmethyl | | 20 | | | | | | | | | | | | | |
| Dinosebacetat | | | | 30 | | | | | | | | | | | |
| Pyrazophos | 6 | | | | 15 | | | | | | | | | | |
| Wasser | 5 | 10 | | 18 | | 7 | 5 | 15 | | 5 | 15 | | 10 | 10 | 9 |
| [R]Soprophor FL | 7 | 15 | | 9 | 5 | 8 | 5 | 15 | 8 | 5 | 15 | 8 | 9 | 9 | 8 |
| Dioctylphthalat | 22 | 50 | | 35 | 20 | 30 | 30 | | 32 | 30 | | 32 | 15 | 16 | 15 |
| 1/2 Methylnaphthalin | | | | | | | | | | | | | | | |
| Dibutylphthalat | | | | | | | | | | | 22 | | | | |

Fortsetzung Tabelle

| Zusammensetzung | Beispiele | | | | | | | | | | | | | | |
|---|---|---|---|---|---|---|---|---|---|---|---|---|---|---|---|
| | 28 | 29 | 30 | 31 | 32 | 33 | 34 | 35 | 36 | 37 | 38 | 39 | 40 | 41 | 42 |
| Isoproturon-Susp.[1] | | | | | | | | | | | | | | | 30 |
| Atrazin-Susp.[7] | 30 | 30 | 30 | 30 | 30 | 30 | | | | | | | | | |
| Cyanazin-Susp.[8] | 20 | 20 | 20 | | | | 30 | 30 | 25 | | | | 15 | 15 | |
| Simazin-Susp.[9] | | | | 20 | 20 | 20 | 30 | 30 | 25 | | | | | | |
| Diuron-Susp.[10] | | | | | | | | | | 30 | 30 | 30 | 40 | 40 | |
| Trifluralin | | 8 | 6 | | 8 | 8 | | 5 | 11 | | 10 | 10 | | | 12 |
| Pendimethalin | 10 | | 8 | 10 | 11 | 6 | 4 | 8 | 7 | 8 | | 8 | 8 | 10 | |
| Wasser | 13 | 20 | 7 | 9 | 11 | 8 | | 10 | | | | | | | |
| RSoprophor FL | | | 9 | 13 | 15 | 8 | | 17 | 3 | 22 | 21 | 6 | 10 | 10 | 20 |
| Dioctylphthalat | 15 | 10 | 16 | 14 | | 20 | 14 | | 10 | 11 | 10 | 9 | 11 | 10 | |
| Xylol | | | 4 | | | | | | 19 | 14 | 14 | 22 | 16 | 15 | 25 |
| 1/2 Methylnaphthalin | | 2 | | | | | | | | | | | | | |
| RSandoperol A | | 10 | | | | | | | | | | | | | |
| RSandoperol 5 B | 12 | | | | | | | | | | | | | | |
| RSolvesso 150 | | | | 4 | | | 4 | | | | | | | | |
| RSolvesso 200 | | | | | 5 | | 14 | | | | | | | | 13 |
| RAtlox 4856 | | | | | | | | | | | | | | | |
| Preparation 10-D-12 | | | | | | | | | | | | | | | |

Die Suspensionen 1—10 der obigen Tabelle weisen folgende Zusammensetzungen auf:

1) 46 Gew.-% Wirkstoff
   7 Gew.-% eines Kondensationsproduktes von Formaldehyd mit Kresolen
   3 Gew.-% Natriumsalz von $(C_{12}—C_{18})$ Alkylpolyglykoletherphosphat mono-/-dieester, ($^R$Forlanit P, Henkel KGaA)
   2 Gew.-% Entschäumer
   0,2 Gew.-% Aluminiumsilikatpulver (Montmorillionit)
   1 Gew.-% $^R$Darvan Nr. 3, Vanderbilt Corp. USA
   5 Gew.-% Ethylenglykol

2) 38 Gew.-% Wirkstoff
   6 Gew.-% Sulfobernsteinsäurehalbester-Na-salz
   1 Gew.-% Bentonit
   2 Gew.-% $^R$Forlanit P,
   1 Gew.-% Entschäumer
   1 Gew.-% $^R$Darvan Nr. 3
   2 Gew.-% Glyzerin

3) 44 Gew.-% Wirkstoff
   10 Gew.-% Sulfobernsteinsäurehalbester-Na-salz
   4 Gew.-% Natrium-Ligninsulfonat
   2 Gew.-% $^R$Hectorit
   2 Gew.-% Entschäumer
   1,3 Gew.-% $^R$Darvan Nr. 3

4) 40 Gew.-% Wirkstoff
   12 Gew.-% Sulfobernsteinsäurehalbester-Na-salz
   2 Gew.-% Na-Ligninsulfonat
   0,5 Gew.-% $^R$Darvan Nr. 3
   2 Gew.-% Entschäumer
   4 Gew.-% Alkylpolyglykolether
   5 Gew.-% Ethylenglykol

5) 41 Gew.-% Wirkstoff
   11 Gew.-% Sulfobernsteinsäurehalbester-Na-salz
   5 Gew.-% Natrium-Ligninsulfonat
   2 Gew.-% $^R$Darvan Nr. 3
   2 Gew.-% $^R$Forlanit P
   0,5 Gew.-% Bentonit
   6 Gew.-% Ethylenglykol

6) 40 Gew.-% Wirkstoff
   8 Gew.-% Formaldehyd-Kresol Kondensationsprodukt
   4 Gew.-% Ligninsulfonsäurenatriumsalz
   3 Gew.-% $^R$Forlanit P
   1 Gew.-% $^R$Darvan Nr. 3
   2 Gew.-% Entschäumer
   0,1 Gew.-% Polysaccharid

7) 45 Gew.-% Wirkstoff
   11 Gew.-% Sulfobernsteinsäurehalbester-Na-salz
   4 Gew.-% $^R$Forlanit P
   2 Gew.-% Entschäumer
   0,5 Gew.-% Alumosilikatpulver (Montmorillionit)
   5 Gew.-% Alkylpolyglykolether

8) 45 Gew.-% Wirkstoff
   11 Gew.-% Formaldehyd-Kresol-Kondensationsprodukt
   5 Gew.-% Na-Ligninsulfonat
   1 Gew.-% Entschäumer
   0,05 Gew.-% Polysaccharid
   3 Gew.-% Alkylpolyglykolether

9) 45 Gew.-% Wirkstoff
13 Gew.-% Sulfobernsteinsäurehalbester-Na-salz
2 Gew.-% Entschäumer
1,5 Gew.-% [R]Darvan Nr. 3
5 Gew.-% Na-Ligninsulfonat
3 Gew.-% Polyglykolether
0,2 Gew.-% Polysaccharid
6 Gew.-% Ethylenglykol

10) 45 Gew.-% Wirkstoff
15 Gew.-% Sulfobernsteinsäurehalbester-Na-salz
1 Gew.-% Entschäumer
1 Gew.-% Forlanit P
0,2 Gew.-% Polysaccharid
8 Gew.-% Ethylenglykol
2 Gew.-% Formaldehyd-Kresol-Kondensationsprodukt
0,5 Gew.-% [R]Hectorit

Als Entschäumer wurde für die Suspension der Silikonentschäumer SE-2 der Wacker-Chemie eingesetzt.

[R]Darvan Nr. 3=Mischung eines Na-salzes einer Ligninsulfonsäure mit Montmorillionit zu gleichen Teilen.

Der Rest zu 100% bei den oben aufgeführten Suspensionen besteht aus Wasser.

Alle obengenannten Formulierungszusammensetzungen besitzen eine hervorragende Stabilität; sie sind biologisch voll wirksam und zeigen keine Phytotoxizität.

Vergleichsbeispiele
a) Zum Vergleich wurde gemäß europäischer Patentanmeldung 33 291 folgende Formulierung hergestellt:

34,5% einer Isoproturon-Suspension[1] (s.o.),
20,1 Gew.-% Wasser,
9,1 Gew.-% [R]Soprophor FL und
19,3 Gew.-% Dioctylphthalat wurden vorgelegt. Man fügte unter Rühren geschmolzenes Trifluralin hinzu. Hierbei wurde keine stabile Formulierung erhalten.

b) Es wurden
34,5 Gew.-% Isoproturon-Suspension[1] (s.o.)
20,1 Gew.-% Wasser,
9,1 Gew.-% [R]Soprophor FL und
19,3 Gew.-% Dioctylphthalat vorgelegt. Anschließend wurde gemäß europäischer Patentanmeldung 17 001 festes Trifluralin eingerührt. Auch in diesem Falle ließ sich keine stabile Formulierung erhalten, da der Wirkstoff nur teilweise in Lösung ging.

c) Die gleichen negativen Ergebnisse wurden erhalten, wenn man die obengenannte Isoproturon-Suspension ohne Gegenwart von [R]Soprophor FL und Dioctylphthalat vorlegte und hierzu gemäß den beiden oben zitierten Patentanmeldungen Trifluralin in festem oder geschmolzenen Zustand unter Rühren hinzugab.

**Patentansprüche**

1. Flüssige pestizide Mittel auf der Basis von wäßrigen Mischdispersionen, dadurch gekennzeichnet, daß sie ein Wirkstoffkonzentrat eines oder mehrerer unter 70°C schmelzender Wirkstoff auf Basis von Phthalsäure-($C_1$—$C_{12}$)alkylestern als Lösungsmittel in Kombination mit einem wäßrigen Suspensionskonzentrat eines oder mehrerer über 70°C schmelzender Wirkstoffe enthalten.

2. Flüssige pestizide Mittel gemäß Anspruch 1, dadurch gekennzeichnet, daß das Wirkstoffkonzentrat als Emulgatoren Triäthanolaminsalze eines Gemisches von Phosphorsäure mono- und dieestern eines Tristyrylphenol-Polyglykoläthers mit 18 AeO-Einheiten, Aminsalze von ethoxylierten Polyacrylphenolen, Polyglykolether eines Phenolaldehyds, Kondensationsprodukte von Alkylphenolen mit Formaldehyd und Polyaminen oder ein Gemisch aus ionogenen und nichtionogenen Tensiden enthält.

3. Flüssige pestizide Mittel gemäß Ansprüchen 1 und 2, dadurch gekennzeichnet, daß das Wirkstoffkonzentrat Phthalsäure-di ($C_4$—$C_8$)alkylester als Lösungsmittel enthält.

4. Flüssige pestizide Mittel gemäß Ansprüchen 1 bis 3, dadurch gekennzeichnet, daß das Suspensionskonzentrat Alkalisalze von Sulfobernsteinsäurehalbestern, Alkaliligninsulfonate oder Kondensationsprodukte von Formaldehyd mit Kresolen als Dispergiermittel, Alkalisalze von ($C_6$—$C_{24}$) Alkylpolyglykolether (mit 2—20 AeO)-phosphatpartialestern als Netzmittel und Gemische zu gleichen Teilen eines Alkaliligninsulfonats mit einem quellfähigen Erdalkalisilikat als Verdicker enthält.

9

**0 117 999**

5. Flüssige pestizide Mittel gemäß Ansprüchen 1 bis 4, dadurch gekennzeichnet, daß das Wirkstoffkonzentrat 5 bis 50 Gew.-% Wirkstoff, 10 bis 80 Gew.-% Phthalsäureester und 2 bis 20 Gew.-% Emulgatoren sowie das Suspensionskonzentrat 5 bis 55 Gew.-% Wirkstoff, 2 bis 30 Gew.-% Dispergiermittel, 0,1 bis 5 Gew.-% Verdicker und 0,5 bis 8 Gew.-% Netzmittel enthält.

6. Flüssige pestizide Mittel gemäß Ansprüchen 1 bis 5, dadurch gekennzeichnet, daß das Wirkstoffkonzentrat die Wirkstoffe Trifluralin, Pendimethalin, Dinoseb-acetat, Diclofopmethyl, Pyrazophos, (4 - Amino - 3,5 - dichlor - 6 - fluor - 2 - pyridin)oxyessigsäure -isooctylester, und das Suspensionskonzentrat die Wirkstoffe Endosulfan Diuron, Atrazin, Cyanazin, Simazin, Isoproturon, Linuron, Captafol, Carbendazim oder Fentinhydroxid enthält.

7. Flüssige pestizide Mittel gemäß Ansprüchen 1 bis 6, dadurch gekennzeichnet, daß sie die Wirkstoffkombinationen Isoproturon/Trifluralin, Isoproturon/Pendimethalin, Isoproturon/Diclofopmethyl oder Captafol/Pyrazophos enthalten.

8. Verwendung der Mittel gemäß Ansprüchen 1 bis 7 im Pflanzenschutz.

9. Verfahren zur Bekämpfung von Schadorganismen oder Schadpflanzen, dadurch gekennzeichnet, daß man auf diese oder die Kulturböden ein Mittel gemäß Ansprüchen 1 bis 7 aufbringt.

## Revendications

1. Produits pesticides liquides à base de dispersions mixtes aqueuses, produits caractérisés en ce qu'ils contiennent un concentré d'une ou plusieurs matières actives fondant au-dessous de 70°C, à base de phtalates d'alkyles en $C_1$—$C_{12}$ comme solvants, associé à un concentré suspension aqueux d'une ou plusieurs matières actives fondant au-dessus de 70°C.

2. Produits pesticides liquides selon la revendication 1, caractérisés en ce que le concentré de matière(s) active(s) contient, comme émulsionnants, des sels dérivant de la triéthanolamine et d'un mélange de mono-esters et di-esters phosphoriques d'un produit de polyéthoxylation du tristyryl-phénol à 18 motifs éthylène-oxy, des sels dérivant d'amines et de polyacryl-phénols éthoxylés, des produits de polyéthoxylation d'un phénol-aldéhyde, des produits de condensation d'alkylphénols avec le formaldéhyde et des polyamines, ou un mélange de surfactifs ionogènes et non-ionogènes.

3. Produits pesticides liquides selon l'une des revendications 1 et 2, caractérisés en ce que le concentré de matière(s) active(s) contient, comme solvant, un phtalate de dialkyle dont chacun des alkyles contient de 4 à 8 atomes de carbone.

4. Produits pesticides liquides selon l'une quelconque des revendications 1 à 3, caractérisés en ce que le concentré suspension contient, comme dispersants, des sels de métaux alcalins d'hémi-esters de l'acide sulfosuccinique, des lignine-sulfonates de métaux alcalins ou des produits de condensation du formaldéhyde avec des crésols; comme mouillants, des sels de métaux alcalins d'esters phosphoriques partiels de produits de polyéthoxylation d'alcanols en $C_6$—$C_{24}$ qui comportent de 2 à 20 motifs éthylène-oxy, et, comme épaississants, des mélanges à parties égales d'un lignine-sulfonate de métal alcalin et d'un silicate alcalino-terreux gonflable.

5. Produits pesticides liquides selon l'une quelconque des revendications 1 à 4, caractérisés en ce que le concentré de matière(s) active(s) contient de 5 à 50 % en poids de matière(s) active(s), de 10 à 80 % en poids s'ester(s) phtalique(s) et de 2 à 20% en poids d'émulsionnants, tandis que le concentré suspension contient de 5 à 55 % en poids de matière(s) active(s), de 2 à 30 % en poids de dispersant(s), de 0,1 à 5 % en poids d'épaississant(s) et de 0,5 à 8 % en poids de mouillant(s).

6. Produits pesticides liquides selon l'une quelconque des revendications 1 à 5, caractérisés en ce que le concentré de matière(s) active(s) contient l'une des matiéres actives suivantes: trifluraline, pendiméthaline, acétate de dinosèbe, diclofop méthyl, pyrazophos et (amino-4 dichloro-3,5 fluoro-6 pyridyl-2 oxy)-acétate d'iso-octyle, tandis que le concentré suspension contient l'une des matiètes actives suivantes: endosulfan, diuron, atrazine, cyanazine, simazine, isoproturon, linuron, captafol, carbendazime et hydroxyde de fentine.

7. Produits pesticides liquides selon l'une quelconque des revendications 1 à 6, caractérisés en ce qu'ils contiennent l'une des associations suivantes de matières actives: isoproturon/trifluraline, isoproturon/pendiméthaline, isoproturon/diclofop méthyl et captafol/pyrazophos.

8. Application des produits selon l'une quelconque des revendications 1 à 7 en phytopharmacie.

9. Procédé pour combattre des organismes nuisibles ou des plantes nuisibles, procédé caractérisé en ce qu'on applique sur ceux-ci ou celles-ci ou sur les surfaces cultivées un produit selon l'une quelconque des revendications 1 à 7.

## Claims

1. A liquid pesticidal agent based on aqueous mixed dispersions, which contains an active compound concentrate, based on ($C_1$—$C_{12}$)-alkyl esters of phthalic acid as the solvent, of one or more active compounds melting below 70°C, in combination with an aqueous suspension concentrate of one or more active compounds melting above 70°C.

2. A liquid pesticidal agent as claimed in claim 1, wherein the active compound concentrate contains, as emulsifiers, triethanolamine salts of a mixture of phosphoric acid monoesters and diesters of a tristyrylphenol polyglycol ether containing 18 EO units, amine salts of ethoxylated polyacrylylphenols, polyglycol ethers of a phenolaldehyde, condensation products of alkylphenols with formaldehyde and polyamines or a mixture of ionic and non-ionic surfactants.

3. A liquid pesticidal agent as claimed in claims 1 and 2, wherein the active compound concentrate contains a di-$(C_4-C_8)$-alkyl phthalate as the solvent.

4. A liquid pesticidal agent as claimed in any of claims 1 to 3, wherein the suspension concentrate contains alkali metal salts of sulfosuccinic acid half-esters, alkali metal ligninsulfonates or condensation products of formaldehyde and cresols as the dispersing agent, alkali metal salts of phosphate partial esters of $(C_6-C_{24})$-alkyl polyglycol ethers (containing 2—20 EO) as the wetting agent and mixtures of equal parts of an alkali metal ligninsulfonate and a swellable alkaline earth metal silicate as the thickener.

5. A liquid pesticidal agent as claimed in any of claims 1 to 4, wherein the active compound concentrate contains 5 to 50% by weight of active compound, 10 to 80% by weight of phthalic acid ester and 2 to 20% by weight of emulsifiers, and the suspension concentrate contains 5 to 55% by weight of active compound, 2 to 30% by weight of dispersing agent, 0.1 to 5% by weight of thickener and 0.5 to 8% by weight of wetting agent.

6. A liquid pesticidal agent as claimed in any of claims 1 to 5, wherein the active compound concentrate contains the active compounds trifluralin, Pendimethalin, dinoseb acetate, Diclofop-methyl, pyrazophos, isooctyl (4 - amino - 3,5 - dichloro - 6 - fluoro - 2 - pyridine) - oxyacetate and the suspension concentrate contains the active compounds endosulfane, diuron, atrazine, cyanazine, simazine, Isoproturon, linuron, captafol, Carbendazim or fentine hydroxide.

7. A liquid pesticidal agent as claimed in any of claims 1 to 6, which contains the active compound combinations Isoproturon/trifluralin, Isoproturon/Pendimethalin, Isoproturon/Diclofop-methyl or captafol/pyrazophos.

8. The use of an agent as claimed in any of claims 1 to 7 in plant protection.

9. A process for controlling harmful organisms or harmful plants, which comprises applying an agent as claimed in any of claims 1 to 7 to these harmful organisms or harmful plants or to the cultivated soils.